# EUROPÄISCHE PATENTANMELDUNG

(11) **EP 1 312 435 A2**
(43) Veröffentlichungstag der Anmeldung: **21.05.2003**
(21) Anmeldenummer: 02025759.8
(22) Anmeldetag: 15.11.2002
(51) Int. Cl.: B23K 26/00, B23K 26/24, B23K 33/00

(54) **Laserschweissverfahren zum Verbinden von Blechteilen**

(30) Priorität: 16.11.2001 DE 10156106
(71) Anmelder: Isaak, Klaus, 74653 Künzelsau-Gamberg (DE)
(72) Erfinder: Die Erfindernennung liegt noch nicht vor
(74) Vertreter: Herzog, Günter

(57) **Zusammenfassung**

Es wird ein Verfahren und ein Gebläserad zur Durchführung des Verfahrens vorgeschlagen, bei dem zwei quer zueinander stehende Bleche dadurch verbunden werden, dass durch Schlitze (8) des einen Teils gesteckte Blechlappen (7) des anderen Teils an den freien Enden mit dem anderen Teil laserverschweißt sind.

## Beschreibung

### Stand der Technik

Die Erfindung geht aus von einem Verfahren zum Verbinden von quer zueinander angeordneten Blechteilen nach der Gattung des Hauptanspruchs, bzw. um ein Gebläserad zur Durchführung dieses Verfahrens nach dem Oberbegriff des Nebenanspruchs 3.

Da das Schweißen von dünnen Blechteilen besonders für Gebläseräder problematisch ist, da auf Grund der guten Leitfähigkeit des Materials einerseits und der partiellen starken Erhitzung andererseits ungewünschte Verformungen und Verbindungen des Werkstückes stattfinden können, wird üblicherweise die Verbindung zwischen senkrecht zueinander angeordneten Blechteilen, bei denen die Stirnseite des einen Blechteiles auf der Fläche des anderen Blechteiles angeordnet ist im mechanischen Kaltverfahren ausgeführt. Hierbei werden an der Stirnseite des einen Bleches Zungen vorgesehen, die durch entsprechende im anderen Blech vorhandene Schlitze gesteckt werden, um dann rückseitig durch Verwinden des freien Zungenendes eine feste Verbindung zu erzielen. Da dieses Verfahren ohne Wärmezufuhr erfolgt besteht keine Gefahr eines Wärmeverzugs am Werkstück. Nachteilig allerdings bei diesem Verfahren ist der hohe Aufwand für die Fertigungsvorrichtung mit entsprechenden aufwendigen Spann- und Verbindungsvorrichtungen sowie dass die freien und verwundenen Zungenenden über die Fläche des Bleches, durch welches sie gesteckt sind, hinausragen und dadurch hindernt sein können. Außerdem kann bei solchen kaltverbundenen Teilen bei mechanischer Beanspruchung eine Lockerung der Verbindung stattfinden mit dem Nachteil geringerer Festigkeit, bzw. Geräuschentwicklung durch Klappern oder dergleichen.

### Die Erfindung und ihre Vorteile

Das erfindungsgemäße Verfahren mit den kennzeichnenden Merkmalen des Hauptanspruchs, bzw. das erfindungsgemäße Gebläserad mit den kennzeichnenden Merkmalen des Nebenanspruchs 3 hat demgegenüber den Vorteil, dass eine sehr feste Verbindung zwischen den quer zueinander angeordneten Blechteilen entsteht bei einem verhältnismäßig geringen Aufwand in der Fertigung. Abgesehen davon, dass der Zeitaufwand für das Laserschweißen außerordentlich gering ist, entsteht durch die nur sehr kurz zugeführte aber entsprechende hohe Energie kein Verzug der Werkstückteile. Außerdem brauchen die durch die Schlitze gesteckten Blechlappen in der Länge lediglich der Dicke des Bleches entsprechen, so dass sie über die Blechfläche durch diese gesteckt sind, nicht herausragen müssen. Laserschweißen von Blechen ist bereits seit langem bekannt (DE OS 4439000), allerdings mit lediglich auf Stoß miteinander zu verbindenden Metallbändern. Allerdings ist üblicherweise die Belastung eines solchen Stahlbandes weniger auf Knicken gerichtet, bzw. die Beanspruchung einer Schweißnaht zwischen den Stirnenden eines Metallbandes ist eine andere als jene zwischen zwei quer zueinander verbundenen Blechteilen, bei denen eine latente Knickbeanspruchung vorhanden ist, so dass dieses bekannte Schweißverfahren nicht unmittelbar übertragbar ist auf quer zueinander angeordnete Bleche. Es ist zwar ein Verfahren zum Verbinden von quer zueinander stehenden Blechen, nämlich für ein Radiallaufrad bekannt (DE OS 3814186) allerdings als Buckelschweißen mit den dadurch gegebenen Problemen.

Nach einer vorteilhaften Ausgestaltung der Erfindung entspricht die Länge der Blechlappen in Steckrichtung der Dicke des den Einsteckschlitz aufweisenden Blechteiles. Hierdurch kann erreicht werden, dass auf der dem befestigten Blechteil abgewandten Seite des anderen Blechteils eine glatte Fläche entsteht ohne störende freie Enden von Einstecklappen.

Nach einer das Gebläserad betreffenden vorteilhaften Ausgestaltung der Erfindung ist dem Schaufelträgerring zugeordnet parallel zu diesem ein Haltering in gleicher Weise nämlich Stecken und Laserschweißen mit den Schaufeln verbunden.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und im Folgenden näher beschrieben. Es zeigen:
- Figur 1: eine Vorderansicht eines Gebläserades;
- Figur 2: einen Teilschnitt an der Verbindungsstelle der Gebläsebleche gemäß der Linie I in Fig. 3 und
- Figur 3: eine Ansicht gemäß dem Pfeil II in Fig. 2.

### Beschreibung des Ausführungsbeispiels

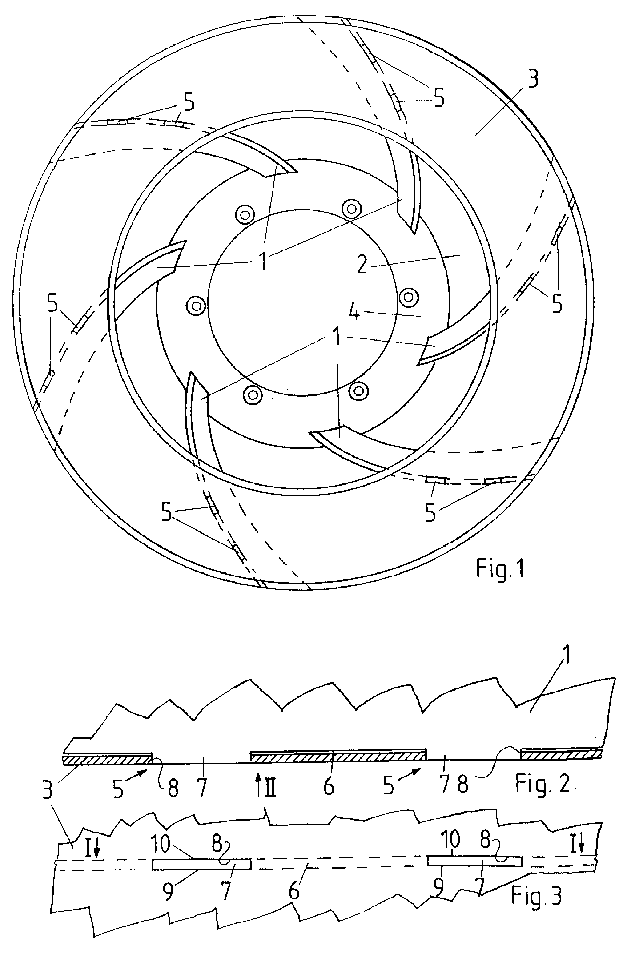

In Figur 1 ist ein Gebläserad dargestellt mit Blechschaufeln 1, welche zwischen einem Schaufelträgerring 2 und einem Haltering 3 angeordnet sind und wie in Figur 2 und 3 dargestellt mit diesen Ringen befestigt sind. Bei dem Gebläserad handelt es sich um ein übliches Schaufelrad mit gewundenen Schaufeln, wobei der Antrieb über den Schaufelträgerring 2 erfolgt, wobei Schaufelträgerring 2 und Haltering 3 wie auch die Blechschaufeln 1 aus Blech bestehen. Für den Antrieb ist am Schaufelträgerring 2 eine Flanschprägung 4 vorgesehen, über die das Gebläserad an eine Antriebswelle flanschbar ist. Die Luftströmung erfolgt einerseits axial durch den Haltering 3 und andererseits radial zwischen Schaufelträgerring 2 und Haltering 3.

Die in Figur 1 mit 5 angedeuteten Verbindungsstellen zwischen den Blechschaufeln 1 und dem Schaufelträgerring 2, bzw. Haltering 3 sind in Figur 2 und 3 in vergrößertem Maßstab dargestellt. An den Stirnseiten 6, die dem Schaufelträgerin 2, bzw. dem Haltering 3 zugewandt sind, sind Blechlappen 7 angeordnet, welche in entsprechende Schlitze 8 des Schaufelträgerrings 2, bzw. Halterings 3 gesteckt sind, um danach durch Laserschweißen mit diesen verbunden zu werden. Das Laserschweißen erfolgt bevorzugt einseitig der Blechlappen 7 wie durch die Schweißnähte 9 angedeutet.

Die Blechlappen 7 können aber auch über Schweißnähte 9, 10 an ihren Ober- und ihren Unterseiten mit der Wand der jeweiligen Ausnehmung 8 verbunden sein.

Die Herstellung des Gebläserades erfolgt in folgenden Schritten:
- Stanzen und Vorformen der Bleche
- Zusammenstecken von Blechschaufeln 1 mit Schaufelträgerring 2, bzw. Haltering 3
- Laserschweißen an der Steckstelle außen und einseitig zwischen Blechlappen 7 und Wand der Schlitze 8 unter gerichteter Zuführung hoher Laserenergie.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Blechschaufeln
- 2: Schaufelträgerring
- 3: Haltering
- 4: Flanschprägung
- 5: Verbindungsstellen
- 6: Stirnseite
- 7: Blechlappen
- 8: Schlitze, Ausnehmung
- 9: Schweißnaht
- 10: Schweißnaht

## Patentansprüche

1. Verfahren zum Verbinden von quer zueinander angeordneten Blechteilen (1, 2, 3) von denen eines der Blechteile (1) an seiner stirnseitigen Stoßstelle (6) zum anderen Blechteil (2, 3) einen Einstecklappen (7) aufweist und das andere Blechteil (2, 3) einen diesen Einstecklappen zugeordneten Einsteckschlitz (8) zur Aufnahme des Einstecklappens (7) aufweist, wobei nach Einstecken des Einstecklappens (7) in den Einsteckschlitz (8) und entsprechender Bearbeitung die Blechteile (1, 2) miteinander verbunden werden, **dadurch gekennzeichnet,**
- **dass** der Blechlappen (7) seitlich und flächig an mindestens der einen ihm zugewandten Innenwand des Einsteckschlitzes (8) anliegt und
- **dass** zur Herstellung der Verbindung ein Laserschweißverfahren verwendet wird mit kurzfristiger Aufbringung hoher Laserenergie entlang dieser Anliegestelle.

2. Verfahren nach Anspruch 1, **dadurch gekennzeichnet, dass** die Länge der Blechlappen (7) in Steckrichtung der Dicke des den Einsteckschlitz (8) aufweisenden Blechteiles entspricht.

3. Gebläserad insbesondere zur Durchführung des Verfahrens nach Anspruch 1 oder 2 mit mindestens einem Blechförmigen Schaufelträgerring (2) und mit quer an diesem befestigten Blechschaufeln (1), wobei im Schaufelring schlitzförmige Ausnehmungen (8) vorhanden sind, in welche an den Schaufeln (1) angeordnete Blechlappen (7) steckbar sind,
**dadurch gekennzeichnet, dass** zur Befestigung eine Schweißnaht (9) eines Laserschweißers zwischen Blechlappen (7) und Wand der Ausnehmung (8) dient.

4. Gebläserad nach Anspruch 3, **dadurch gekennzeichnet, dass** zur Befestigung Schweißnähte (9, 10) eines Laserschweißers sowohl zwischen der Oberseite als auch zwischen der Unterseite eines jeden Blechlappens (7) und der Wand der jeweiligen Ausnehmung (8) dienen.

5. Gebläserad nach Anspruch 3 oder 4, **dadurch gekennzeichnet, dass** dem Schaufelträgerring (2) zugeordnet und parallel zu diesem ein Haltering (3) in gleicher Weise (nämlich gesteckt und laserverschweißt) mit den Schaufeln (1) verbunden ist.
